# EUROPÄISCHE PATENTSCHRIFT

(11) **EP 3 782 257 B1**
(45) Veröffentlichungstag und Bekanntmachung des Hinweises auf die Patenterteilung: **29.06.2022**
(21) Anmeldenummer: 19720490.2
(22) Anmeldetag: 17.04.2019
(51) Int. Cl.: H02J 7/00

(54) **BODENSTEHENDER ENERGIESPENDER SOWIE SYSTEM UMFASSEND EINEN ENERGIESPENDER UND EINE VERSORGUNGSEINRICHTUNG**
FLOOR-STANDING ENERGY DISPENSER, AND SYSTEM COMPRISING AN ENERGY DISPENSER AND A SUPPLY DEVICE
DISTRIBUTEUR D'ÉNERGIE SUR PIED ET SYSTÈME COMPRENANT UN DISTRIBUTEUR D'ÉNERGIE ET UN DISPOSITIF D'ALIMENTATION

(30) Priorität: 17.04.2018 DE 102018109089
(43) Veröffentlichungstag der Anmeldung: 24.02.2021
(73) Patentinhaber: Zwick, Carola, 10587 Berlin (DE); Zwick, Roland, 10587 Berlin (DE); Schmitz, Burkhard, 10587 Berlin (DE)
(72) Erfinder: Zwick, Carola, 10587 Berlin (DE); Zwick, Roland, 10587 Berlin (DE); Schmitz, Burkhard, 10587 Berlin (DE)
(74) Vertreter: Otten, Roth, Dobler & Partner mbB Patentanwälte
(86) Internationale Anmeldenummer: PCT/EP2019/059931
(87) Internationale Veröffentlichungsnummer: WO 2019/201996

(56) Entgegenhaltungen:
- EP-A1- 3 151 366
- US-A1- 2018 023 802
- Philip Michaels: "Gloo Smart Lava Lamp Glows as It Charges Your Phones", Tom's Guide, 1. März 2017 (2017-03-01), XP055607093, Internet Gefunden im Internet: URL:https://www.tomsguide.com/us/gloo-devi ce-charger,news-24574.html [gefunden am 2019-07-18]

## Beschreibung

Die Erfindung betrifft einen bodenstehenden Energiespender sowie ein System, welches einen Energiespender und eine Versorgungseinrichtung umfasst, gemäß dem Anspruch 1 bzw. 12. Aus der EP 2 929 808 A1 ist ein als Tisch ausgebildetes Möbel bekannt an oder in dem ein Speichermodul zum Speichern von elektrischer Energie und zur Abgabe der gespeicherten elektrischen Energie an ein an dem Möbel anordenbares elektrischen Gerät anordenbar ist.

Die Internet-Veröffentlichung "Gloo Smart Lava Lamp Glows as It Charges Your Phones", (https://www.youtube.com/watch?v=dzaYZX7MbnQ) zeigt einen Energiespender mit Lampenfunktion und trichterartiger Mantelhülle.

Die Patentanmeldungen US 2018/023802 A1 und EP 3 151 366 A1 zeigen Energiespender nach dem Stand der Technik.

Der Erfindung liegt die Aufgabe zugrunde, einen bodenstehenden Energiespender sowie ein System, welches einen Energiespender und eine Versorgungseinrichtung umfasst, zu entwickeln, welcher bzw. welches einfach zusammenbaubar, standsicher sowie insbesondere zugstabil und damit zu Tragen mit der Hand geeignet ist.

Diese Aufgabe wird durch die Merkmale des Anspruchs 1 bzw. 12 gelöst. In den jeweiligen Unteransprüchen sind vorteilhafte und zweckmäßige Weiterbildungen angegeben. Der erfindungsgemäße bodenstehende Energiespender umfasst eine Bodenplatte, eine trichterartige Mantelhülle mit einem Trichtereinlass und einem Trichterauslass, einen rohrartigen Hals mit einem Rohreinlass und einem Rohrauslass, einen Kopf, wenigstens eine Ladesteckdose, einen Kabelbaum und einen Energiespeicher für elektrische Energie, wobei die Mantelhülle mit ihrem Trichtereinlass mit der Bodenplatte verbunden ist, wobei die Mantelhülle mit ihrem Trichterauslass in den Einlass des Halses übergeht und wobei der Hals mit seinem Auslass in den Kopf übergeht, wobei die wenigstens eine Ladesteckdose in dem Kopf angeordnet ist, wobei die wenigstens eine Ladesteckdose mit einem ersten Ende des Kabelbaums verbunden ist, wobei der Kabelbaum aus dem Kopf heraus durch einen Innenraum des Halses in einen Hohlraum der Mantelhülle geführt ist, wobei der Energiespeicher in dem Hohlraum der Mantelhülle angeordnet ist und wobei ein zweites Ende des Kabelbaums mit dem Energiespeicher verbunden ist. Ein derartiger Energiespender ist durch die schichtweise verbauten Komponenten einfach zusammenbaubar und durch die tiefliegende Anordnung des Energiespeichers standsicher.

Es ist auch vorgesehen, den Energiespeicher als ringartigen Körper mit einer Durchgangsöffnung auszubilden. Hierdurch weist dieser zu allen Seiten die gleiche Standsicherheit auf.

Es ist auch vorgesehen, dass der Energiespender weiterhin ein Verbindungsmittel umfasst, wobei der Kopf durch den Hals und die Mantelhülle hindurch durch das Verbindungsmittel mit der Bodenplatte verbunden ist, wobei das Verbindungsmittels als starres Verbindungsmittel, insbesondere als Stange und vorzugsweise als Gewindestange oder als flexibles Verbindungsmittel, insbesondere als Schnur oder als Band verbunden ist. Auf diese Weise müssen weder der Hals noch die Mantelhülle beim Tragen des Energiespenders an dem ein Griffelement bildenden Kopf eine aus der Gewichtskraft des Energiespeichers resultierende Zugkraft übertragen. Somit weist der Energiespender eine hohe Zugstabilität auf und es können trotz eines leichten und technisch einfachen Aufbaus von Hals und Mantelhülle auch vergleichsweise schwere und damit leistungsstarke Energiespeicher verbaut werden, ohne dass dadurch der konstruktive Aufbau des Energiespeichers geändert werden muss.

Weiterhin ist es vorgesehen, dass die Durchgangsöffnung des Energiespeichers zentrisch zu der Bodenplatte ausgerichtet ist und dass der Energiespeicher insbesondere flächig auf einer Oberseite der Bodenplatte aufliegt und dass die Durchgangsöffnung von dem Verbindungsmittel durchlaufen ist. Hierdurch ist es möglich einen standsicheren und nach allen Seiten in gleicher Weise kippsicheren Energiespeicher auszubilden.

Es ist auch vorgesehen, dass die Bodenplatte einen Durchmesser aufweist, welcher wenigstens einem 3-fachen und vorzugsweise wenigstens einem 4-fachen eines Durchmessers des Halses, insbesondere im Bereich des Rohreinlasses entspricht. Hierdurch weist der Energiespeicher eine vergleichsweise große Auflagefläche auf und ist zum Kopfbereich hin schlank, so dass dieser nah an Tischplatten herangerückt werden kann.

Es ist auch vorgesehen, dass der Energiespender wenigstens eine Plattform umfasst, wobei die Plattform zwischen der Mantelhülle und dem Kopf angeordnet ist und insbesondere zwischen der Mantelhülle und dem Hals angeordnet ist. Hierdurch wird eine Ablagefläche geschaffen, welche es erlaubt den Energiespender ohne weitere Möbel für die Ablage von zu ladenden Geräten zu nutzen.

Es ist auch vorgesehen, dass die Plattform wenigstens eine Sendeeinrichtung zur drahtlosen Energieübertragung umfasst, wobei die Sendeeinrichtung derart ausgebildet ist, dass ein auf der Plattform liegendes mobiles Gerät, welches eine geeignete Empfangseinrichtung umfasst, ladbar ist, wobei die wenigstens eine Sendeeinrichtung über den Kabelbaum mit dem Energiespeicher verbunden ist. Hierdurch wird das Laden von mobilen Geräten besonders vereinfacht und der Energiespender eignet sich hierdurch insbesondere auch zum kurzzeitigen Laden von mobilen Geräten.

Weiterhin ist es vorgesehen, dass die wenigstens eine Ladesteckdose in dem Kopf derart angeordnet ist, dass ein Stecker eines anzuschließendes Geräts bei stehendem Energiespender in horizontaler Richtung mit der Ladesteckdose verbindbar und in horizontaler Richtung von der Ladesteckdose trennbar ist. Hierdurch sind ein Ein- und Ausstecken und eine Identifizierung der Bauart der jeweiligen Ladesteckdose besonders einfach möglich, da die Kontaktflächen der Ladesteckdosen für einen Nutzer aus einer Sitzposition gut sichtbar sind.

Es ist auch vorgesehen, dass der Energiespender ein Ladegerät umfasst, über welches der Energiespeicher mit Strom versorgbar und ladbar ist, wobei das Ladegerät derart ausgebildet ist, dass dieses mittels einer drahtlos versorgbaren Empfangseinrichtung und/oder drahtgebunden mittels eines Gegensteckers mit Strom versorgbar ist. Hierdurch lässt sich der Energiespender technisch derart ausstatten, dass dieser ohne Umstellung an 220V-Netzen und 110V-Netzen betrieben werden kann und auch induktiv zugeführte Leistungen optimal an den Energiespeicher weitergeleitet werden können.

Weiterhin ist es auch vorgesehen, dass der Energiespender eine Leistungselektronik umfasst, wobei die Leistungselektronik insbesondere einen Spannungswandler oder insbesondere einen Spannungswandler und einen Wechselrichter umfasst, wobei die Leistungselektronik insbesondere an dem Kabelbaum angeschlossen ist und insbesondere zwischen dem Energiespeicher und der wenigstens einen Ladesteckdose angeordnet ist oder insbesondere zwischen dem Energiespeicher und der wenigstens einen Ladesteckdose und der Plattform angeordnet ist. Durch eine entsprechende Leistungselektronik lassen sich an dem Energiespender mobile Geräte mit unterschiedlicher Spannung und Leistung versorgen.

Schließlich ist es auch vorgesehen, dass der Energiespender wenigstens eine von dem Energiespeicher gespeiste Lichtquelle umfasst, wobei die Lichtquelle insbesondere als flächiges Leuchtmittel an einer der Bodenplatte gegenüber liegenden Fläche des Energiespenders insbesondere einer Unterseite einer Plattform angeordnet ist oder an einer von der Bodenplatte abgewandten Fläche des Energiespenders, insbesondere einer Oberseite einer Plattform angeordnet ist oder wobei die Lichtquelle insbesondere als punktförmiges oder flächiges Leuchtmittel an einer Verlängerung des Kopfes oder einer Verlängerung des Halses angeordnet ist. Derartige Energiespender machen eine zusätzliche Bereitstellung von Beleuchtungsmitteln überflüssig.

Das erfindungsgemäße System umfasst einen Energiespender und eine Versorgungseinrichtung, wobei der Energiespeicher als bodenstehender Energiespender entsprechend wenigstens einem der Ansprüche 1 bis 10 ausgebildet ist und wobei durch die Versorgungseinrichtung eine drahtgebundene und/oder drahtlose Energieversorgung für den Energiespender bereitstellbar ist, wenn der Energiespender mit seiner Bodenplatte auf eine Kontaktplatte der Versorgungseinrichtung abgestellt ist. Ein derartiges System ist durch die schichtweise verbauten Komponenten des Energiespenders einfach zusammenbaubar und durch die tiefliegende Anordnung des Energiespeichers sowohl auf einem Untergrund als auch auf der Versorgungseinrichtung standsicher.

Es ist auch vorgesehen, dass die Versorgungseinrichtung die Bodenplatte des Energiespenders oder die Bodenplatte und die Mantelhülle des Energiespenders formschlüssig aufnimmt. Hierdurch ist die Standsicherheit des Energiespenders weiter erhöht. Außerdem ist hierdurch auch eine zuverlässige Energieübertragung von der Bodenplatte auf den Energiespender gewährleistet.

Weiterhin ist es vorgesehen, dass zur drahtlosen Energieübertragung die Versorgungseinrichtung eine Sendeeinrichtung umfasst und der Energiespender eine Empfangseinrichtung umfasst, wobei die Sendeeinrichtung insbesondere im Bereich der Kontaktplatte der Versorgungseinrichtung angeordnet ist und wobei die Empfangseinrichtung insbesondere im Bereich der Bodenplatte des Energiespenders angeordnet ist. Hierdurch ist es für einen Nutzer ausreichend, den Energiespender auf der Bodenplatte abzustellen, um dessen Energiespeicher zu laden.

Schließlich sieht das System vor, dass zur drahtgebundenen Energieübertragung die Versorgungseinrichtung einen Stecker umfasst und der Energiespender einen Gegenstecker umfasst, wobei der Stecker insbesondere im Bereich der Kontaktplatte der Versorgungseinrichtung und insbesondere zentrische auf einer Oberseite der Kontaktplatte angeordnet ist, wobei der Gegenstecker insbesondere im Bereich der Bodenplatte des Energiespenders und insbesondere zentrisch an einer Unterseite der Kontaktplatte angeordnet ist, wobei der Stecker und der Gegenstecker insbesondere als Koaxialstecker ausgebildet sind und vorzugsweise als für die Übertragung von Wechselstrom ausgebildete Koaxialstecker ausgebildet sind. Auch bei einer derartigen Ausbildung ist es für einen Nutzer ausreichend, den Energiespender auf der Bodenplatte abzustellen, um dessen Energiespeicher zu laden.

Weitere Einzelheiten der Erfindung werden in der Zeichnung anhand von schematisch dargestellten Ausführungsbeispielen beschrieben.

Hierbei zeigt:
- Figur 1a:: eine perspektivische Ansicht einer ersten Ausführungsvariante eines erfindungsgemäßen bodenstehenden Energiespenders;
- Figur 1b:: eine perspektivische Ansicht einer ersten Ausführungsvariante einer Versorgungseinrichtung für den in der Figur 1a gezeigten Energiespender;
- Figur 2:: eine zweite Ausführungsvariante eines erfindungsgemäßen bodenstehenden Energiespenders;
- Figur 3:: eine dritte Ausführungsvariante eines erfindungsgemäßen bodenstehenden Energiespenders;
- Figur 4:: eine Schnittdarstellung des in der Figur 1a gezeigten Energiespenders;
- Figur 5:: eine Schnittdarstellung einer vierten Ausführungsvariante eines erfindungsgemäßen bodenstehenden Energiespenders;
- Figur 6 und 7:: zwei Schnittdarstellung einer fünften Ausführungsvariante eines bodenstehenden Energiespenders einschließlich einer Schnittdarstellung einer zugehörigen Versorgungseinrichtung und
- Figur 8a-8e:: fünf Varianten einer sechsten Ausführungsvariante eines bodenstehenden Energiespenders.

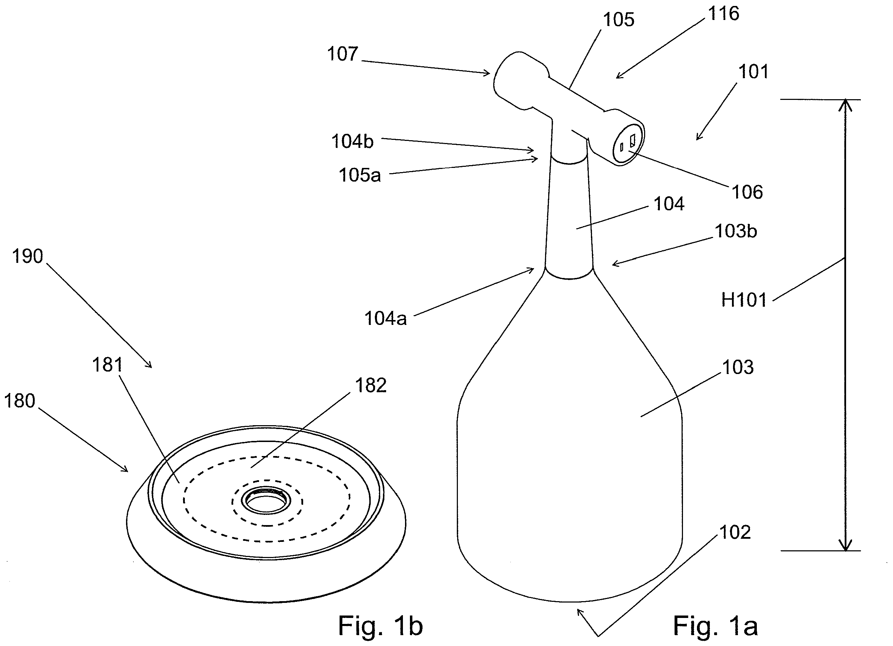

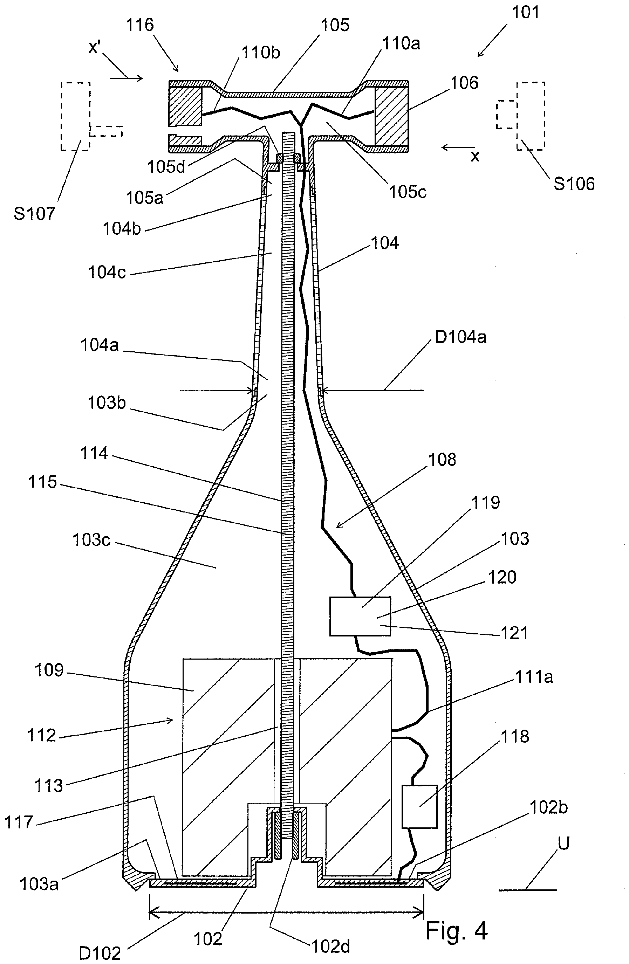

In der Figur 1a ist eine erste Ausführungsvariante eines erfindungsgemäßen bodenstehenden Energiespenders 101 in perspektivischer Ansicht gezeigt. Dieser Energiespender 101 ist weiterhin in der Figur 4 in einer teilweise schematischen Schnittansicht dargestellt. Der Energiespender 101 umfasst eine Bodenplatte 102, eine trichterartige Mantelhülle 103 mit einem Trichtereinlass 103a und einem Trichterauslass 103b, einen rohrartigen Hals 104 mit einem Rohreinlass 104a und einem Rohrauslass 104b, einen Kopf 105 mit einem Kopfeinlass 105a, eine erste Ladesteckdose 106 und eine zweite Ladesteckdose 107, einen Kabelbaum 108 und einen Energiespeicher 109 zur Speicherung von elektrischer Energie.

Hierbei ist die Mantelhülle 103 mit ihrem Trichtereinlass 103a mit der Bodenplatte 102 verbunden. Weiterhin geht die Mantelhülle 103 mit ihren Trichterauslass 103b in den Einlass 104a des Halses 104 über und der Hals 104 geht mit seinem Auslass 104b über den Kopfeinlass 105a in den Kopf 105. Die Ladesteckdosen 106, 107 sind in dem Kopf angeordnet und mit ersten Ende 110a, 110b des Kabelbaums 108 verbunden. Der Kabelbaum 108 ist aus einem Innenraum 105c des Kopfes 105 heraus durch einen Innenraum 104c des Halses 104 in einen Hohlraum 103c der Mantelhülle 103 geführt. In dem Hohlraum 103c der Mantelhülle 103 ist der Energiespeicher 109 angeordnet. Ein zweites Ende 111a des Kabelbaums 108 ist mit dem Energiespeicher 109 verbunden. Der Energiespeicher 109 ist als ringartiger Körper 112 mit einer Durchgangsöffnung 113 ausgebildet.

Der Energiespender 101 umfasst weiterhin ein Verbindungsmittel 114. Hierbei ist der Kopf 105 durch den Hals 104 und die Mantelhülle 103 hindurch durch ein Verbindungsmittel mit der Bodenplatte 102 verbunden. Das Verbindungsmittel 114 ist als starres Verbindungsmittel in Form einer Gewindestange 115 ausgeführt, welche durch die Durchgangsöffnung 113 hindurch verläuft und mit dem Kopf 105 sowie mit der Bodenplatte 102 verschraubt ist. Hierzu umfasst der Kopf 105 eine Schraubmutter 105d und die Bodenplatte 102 eine Schraubmutter 102d. Der Kopf 105, der Hals 104 und die Mantelhülle 103 sind über Steckverbindungen miteinander verbunden. Gemäß einer nicht dargestellten Ausführungsvariante ist es auch vorgesehen, das Verbindungsmittel als flexibles Verbindungsmittel und insbesondere als Schnur oder als Band auszubilden. Unabhängig von dessen Ausbildung bewirkt das Verbindungsmittel 114 beim Tragen des Energiespenders 101 an dem ein Griffelement 116 bildenden Kopf 105 eine weitgehende Entlastungeine des Halses 104 und der Mantelhülle 103, da aus der Gewichtskraft des Energiespeichers resultierende Zugkraft über das Verbindungsmittel 114 übertragen werden können.

Die erwähnte Durchgangsöffnung 113 des Energiespeichers 109 ist zentrisch zu der Bodenplatte 102 ausgerichtet und der Energiespeicher 109 liegt flächig auf einer Oberseite 102b der Bodenplatte 102 auf, wobei das Verbindungsmittel 114 die Durchgangsöffnung 113 durchläuft und hierdurch auch der Energiespeicher 109 in dem Hohlraum 103c der Mantelhülle 103 verschiebesicher gehalten ist.

Die Bodenplatte 102 weist einen Durchmesser D102 auf, welcher wenigstens einem 3-fachen und vorzugsweise wenigstens einem 4-fachen eines Durchmessers D104a des Halses 104 entspricht, welchen dieser im Bereich seines Rohreinlasses 104a aufweist.

Zusammen mit einer in der Figur 1b in perspektivischer Ansicht gezeigten Versorgungseinrichtung 180 bildet der Energiespeicher 101 ein System 190. Durch die Versorgungseinrichtung 180 ist eine drahtlose Energieversorgung des Energiespeichers 109 des Energiespenders 101 möglich. Hierzu muss der Energiespender 101 mit seiner Bodenplatte 102 auf eine Kontaktplatte 181 der Versorgungseinrichtung 180 gestellt werden. Hierbei nimmt die Versorgungseinrichtung 180 die Bodenplatte 102 des Energiespenders 101 und einen unteren Abschnitt der Mantelhülle 103 des Energiespenders 101 formschlüssig auf, so dass der Energiespender 101 auf die Bodenplatte 102 zentriert ist. Für die drahtlose Energieübertragung umfasst die Versorgungseinrichtung 180 eine Sendeeinrichtung 182, welche in die Kontaktplatte integriert ist (mit gestrichelten Linien angedeutet), und der Energiespender 101 umfasst eine Empfangseinrichtung 117 (schematisch angedeutet), welche in die Bodenplatte 102 integriert ist.

Die Ladesteckdosen 106, 107 sind in dem Kopf 105 derart angeordnet, dass Stecker S106, S107 nicht dargestellter, anzuschließender Geräte bei auf einem Untergrund U stehendem Energiespender 101 in horizontaler Richtung x bzw. x' mit der Ladesteckdose 106 bzw. 107 verbindbar und in horizontaler Richtung x' bzw. x von der Ladesteckdose 106 bzw. 107 trennbar sind.

Der Energiespender 101 umfasst auch ein Ladegerät 118. Über das Ladegerät 118 ist der Energiespeicher 109 mit Strom versorgbar und ladbar, wobei das Ladegerät 118 derart ausgebildet ist, dass dieses von der drahtlosen Empfangseinrichtung 117 versorgbar ist.

Weiterhin umfasst der Energiespender 101 eine Leistungselektronik 119. Die Leistungselektronik 119 umfasst einen Spannungswandler 120 und optional einen Wechselrichter 121. Die Leistungselektronik 119 ist an den Kabelbaum 108 angeschlossen und zwischen dem Energiespeicher 109 und den Ladesteckdose 106, 107 angeordnet.

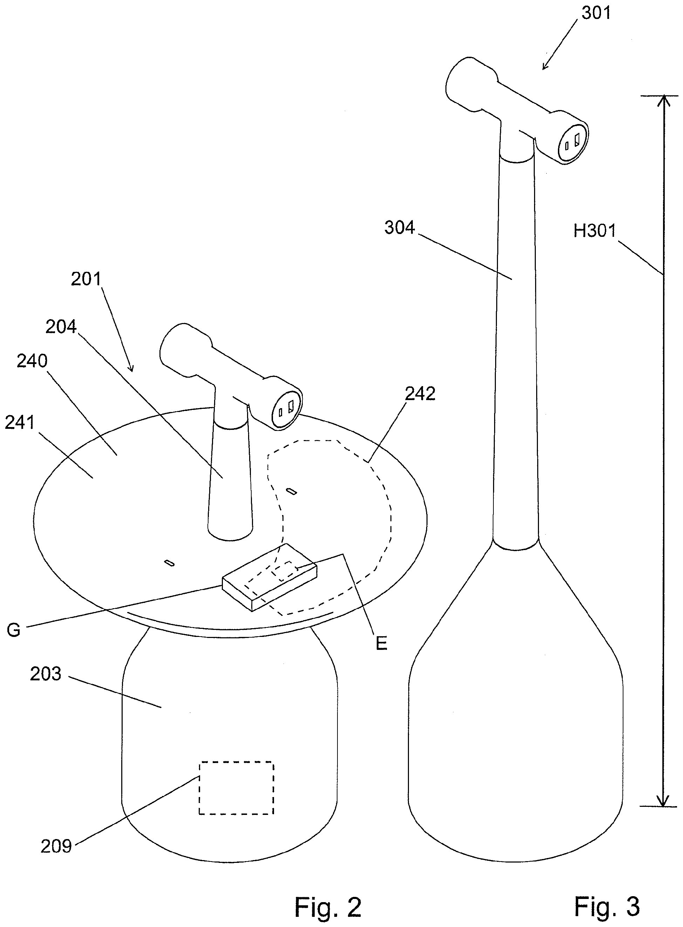

In der Figur 2 ist eine zweite Ausführungsvariante eines erfindungsgemäßen bodenstehenden Energiespenders 201 in perspektivischer Ansicht gezeigt. Dieser Energiespender 201 ist grundsätzlich vergleichbar zu dem in den Figuren 1a und 4 gezeigten Energiespender 101 ausgeführt. Insofern wird auch auf die Beschreibung zu den Figuren 1a und 4 verwiesen. Im Unterschied zu diesem umfasst der Energiespender 201 wenigstens eine Plattform 240, wobei die Plattform 240, welche eine Art Tischplatte 241 bildet, zwischen einer Mantelhülle 203 und einem Hals 204 angerordnet ist. Gemäß einer nicht dargestellten Ausführungsvariante ist es auch vorgesehen, die Plattform zwischen dem Hals und einem Kopf oder in beliebiger Höhenlage an dem Hals oder an der Mantelhülle anzuordnen. Die Plattform 240 umfasst eine schematisch angedeutete Sendeeinrichtung 242 zur drahtlosen Energieübertragung im Nahbereich, wobei die Sendeeinrichtung 242 derart ausgebildet ist, dass ein auf der Plattform liegendes mobiles Gerät G, welches eine geeignete Empfangseinrichtung E umfasst, ladbar ist, wobei die Sendeeinrichtung 242 über einen aus der Beschreibung zu den Figuren 1a und 4 bekannten, in der Darstellung der Figur 2 nicht sichtbaren Kabelbaum mit einem Energiespeicher 209 des Energiespenders 201 verbunden ist.

In der Figur 3 ist eine dritte Ausführungsvariante eines erfindungsgemäßen bodenstehenden Energiespenders 301 in perspektivischer Ansicht gezeigt. Dieser Energiespender 301 ist grundsätzlich vergleichbar zu dem in den Figuren 1a und 4 gezeigten Energiespender 101 ausgeführt. Insofern wird auch auf die Beschreibung zu den Figuren 1a und 4 verwiesen. Im Unterschied zu diesem ist bei dem Energiespender 301 ein Hals 304 länger ausgebildet, so dass der Energiespender 301 mit seiner Höhe H301 geeignet ist neben einen Schreibtisch oder Esstisch gestellt zu werden, wobei der Energiespender 101 mit seiner Höhe H101 zum Beispiel dafür vorgesehen ist, neben einen Sessel oder ein Sofa gestellt zu werden.

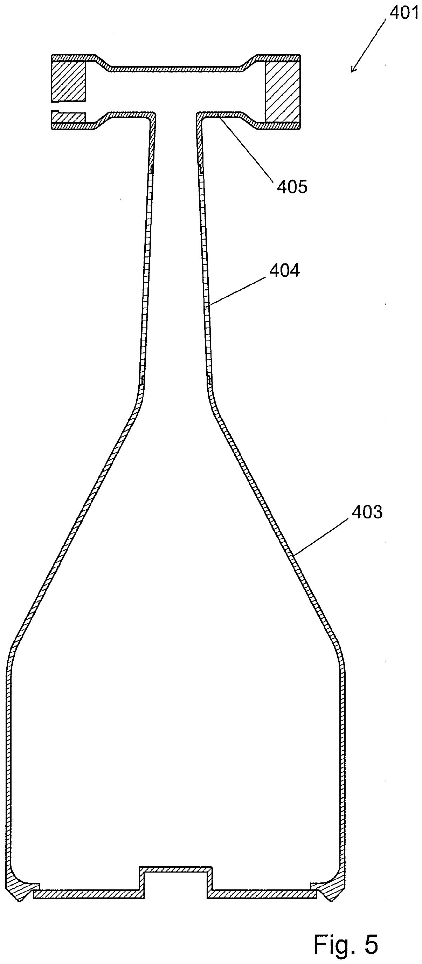

In der Figur 5 ist eine vierte Ausführungsvariante eines erfindungsgemäßen bodenstehenden Energiespenders 401 in Schnittansicht gezeigt. Dieser Energiespender 401 ist grundsätzlich vergleichbar zu dem in den Figuren 1a und 4 gezeigten Energiespender 101 ausgeführt. Insofern wird auch auf die Beschreibung zu den Figuren 1a und 4 verwiesen. Im Unterschied zu diesem (vgl. insbesondere Figur 4) ist der Energiespender 301 ohne Verbindungsmittel ausgebildet, wobei alle anderen in der Figur 4 gezeigten Komponenten wie z.B. Energiespeicher und Kabelbaum selbstverständlich vorhanden und in der Darstellung der Figur 5 nur ausgeblendet sind. Bei dem Energiespender 401 sind Verbindungen zwischen Mantelhülle 403 und Hals 404 sowie Hals 404 und Kopf 405 als zugfeste Verbindungen und beispielsweise als verklebte Steckverbindungen oder als Schraubverbindungen ausgeführt.

Zusammen mit der Versorgungseinrichtung 180 bilden auch die Energiespender 301 und 401 erfindungsgemäße Systeme.

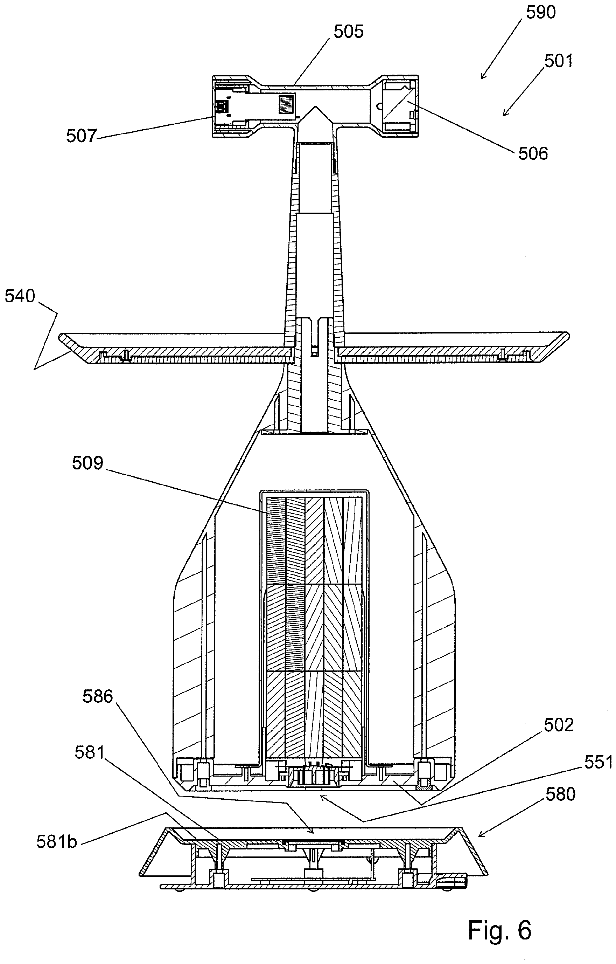

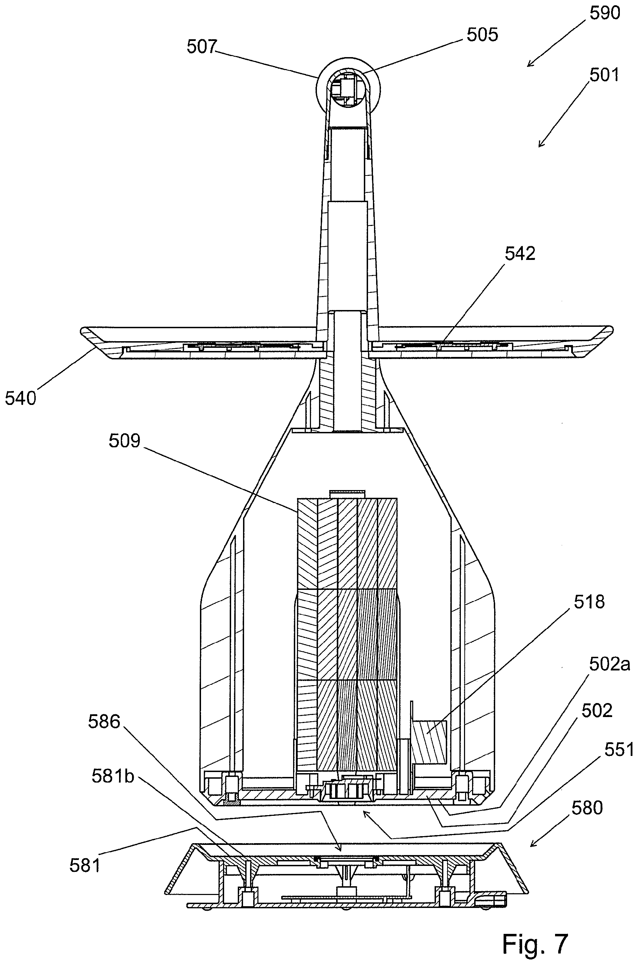

Die Figuren 6 und 7 zeigen zwei Schnittdarstellungen einer fünften Ausführungsvariante eines bodenstehenden Energiespenders 501 einschließlich einer zugehörigen Versorgungseinrichtung 580. Der Energiespender 501 ist grundsätzlich vergleichbar zu dem in der Figur 2 als zweite Ausführungsvariante gezeigten Energiespender 201 ausgeführt und umfasst ebenfalls eine Plattform 540. Zur Erhaltung der Übersichtlichkeit wurde in den Schnittdarstellungen auf die Darstellung eines Kabelbaums verzichtet, welcher einen Energiespeicher 509 mit Ladesteckdosen 506, 507 und einer in der Plattform 540 verbauten Sendeeinrichtung 542 (siehe Figur 7) verbindet. Ebenso ist in den Schnittdarstellungen kein Verbindungsmittel gezeigt, über welches eine Bodenplatte 502 und ein Kopf 505 verbunden ist. Gemäß einer ersten Untervariante umfasst der Energiespender 501 ein derartiges Verbindungsmittel. Gemäß einer zweiten Untervariante ist der Energiespender 501 ohne ein derartiges Verbindungsmittel ausgebildet.

Unterhalb des Energiespenders 501 ist die Versorgungseinrichtung 580 jeweils in der gleichen Schnittansicht gezeigt. Zusammen mit der Versorgungseinrichtung 580 bildet der Energiespender 501 ein erfindungsgemäßes System 590.

Im Unterschied zu der in der Figur 1b gezeigten Versorgungseinrichtung 180 ist durch die Versorgungseinrichtung 580 eine drahtgebundene Energieversorgung für den Energiespender 501 bereitstellbar, wenn der Energiespender 501 mit seiner Bodenplatte 502 auf eine Kontaktplatte 581 der Versorgungseinrichtung 580 abgestellt ist und hierbei derart formschlüssig aufgenommen wird, dass auch eine Mantelhülle 503 des Energiespenders 501 in einem unteren Bereich durch einen umlaufenden Rand der Versorgungseinrichtung kontaktiert und dadurch geführt und ausgerichtet ist. Zur drahtgebundenen Energieübertragung umfasst die Versorgungseinrichtung 580 einen Stecker 586 und der Energiespender 501 einen Gegenstecker 551, wobei der Stecker 586 zentrisch auf einer Oberseite 581b der Kontaktplatte 581 angeordnet ist und wobei der Gegenstecker 551 zentrisch an einer Unterseite 502a der Kontaktplatte 502 angeordnet ist. Hierbei sind der Stecker 586 und der Gegenstecker 551 als Koaxialstecker ausgebildet und für die Übertragung von Wechselstrom geeignet, so dass der Energiespeicher 509 unter Zwischenschaltung eines Ladegeräts 518 geladen werden kann.

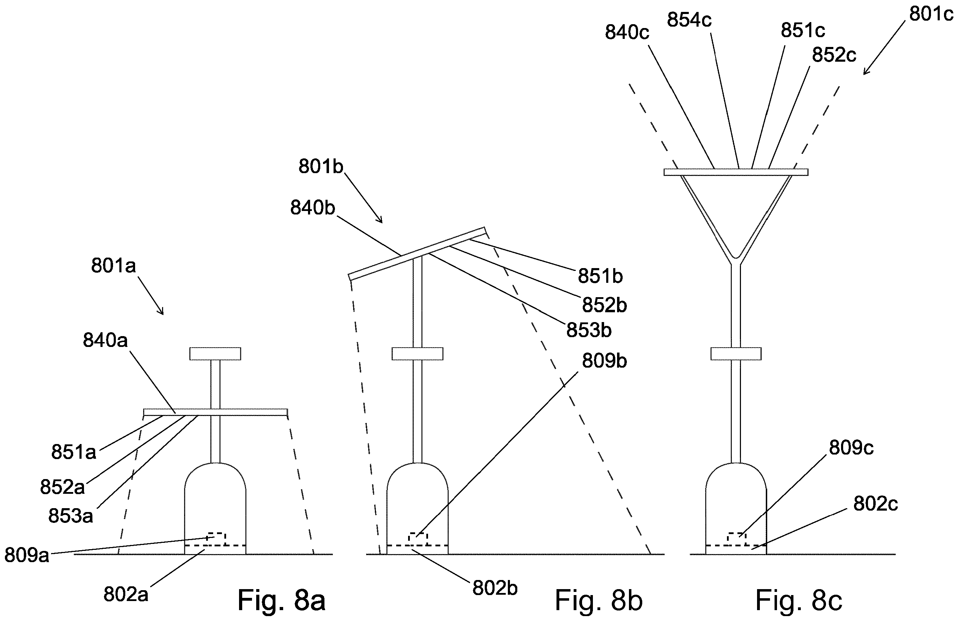

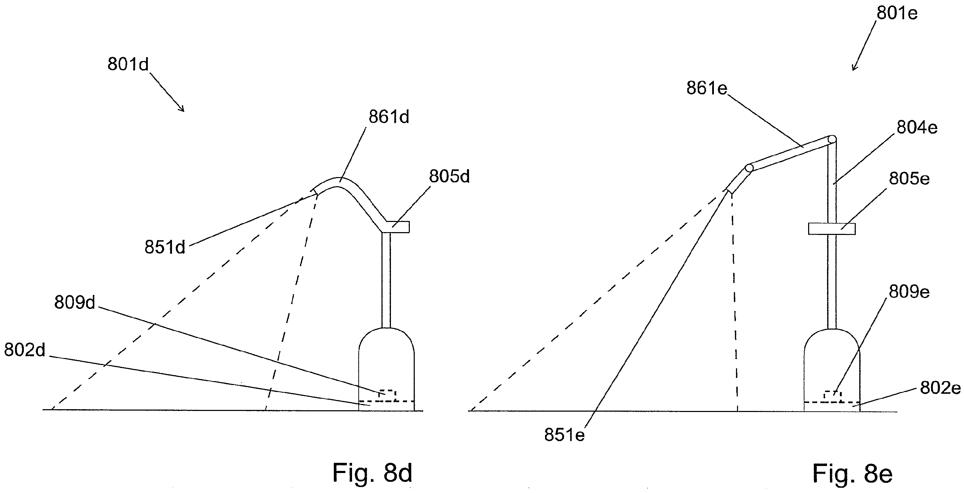

In den Figuren 8a bis 8e sind fünf Varianten einer sechsten Ausführungsvariante eines bodenstehenden Energiespenders 801a bis 801e in schematischer Seitenansicht gezeigt.

Alle Varianten des Energiespenders 801a bis 801e umfassen eine Lichtquelle 851a bis 851e, welche von einem jeweils in dem Energiespender 801a bis 801e verbauten Energiespeicher 809a bis 809e gespeist ist.

Hierbei sind die Energiespender 801a bis 801c dahingehend vergleichbar mit der fünften Ausführungsvariante ausgebildet, dass diese jeweils eine Plattform 840a, 840b, 840c umfassen.

Die Lichtquellen 851a bzw. 851b der Energiespender 801a bzw. 801b sind jeweils als flächige Leuchtmittel 852a bzw. 852b ausgebildet, welche jeweils an einer einer Bodenplatte 802a, 802b gegenüber liegenden Unterseite 853a, 853b der Plattform 840a, 840b angeordnet sind.

Die Lichtquelle 851c des Energiespenders 801c ist als flächiges Leuchtmittel 852c ausgebildet, welches an einer von einer Bodenplatte 802c abgewandten Oberseite 854c der Plattform 840c angeordnet ist.

Bei dem Energiespender 801d ist die Lichtquelle 851d an einer Verlängerung 861d eines Kopfes 805d ausgebildet.

Bei dem Energiespender 801e ist die Lichtquelle 851e an einer Verlängerung 861e eines über einen Kopf 805e hinausreichenden Halses 804e ausgebildet.

Bei allen Ausführungsvarianten sind die Mantelhülle und der Hals als rotationssymmetrische Bauteile ausgeführt.

### Bezugszeichenliste:

- 101: Energiespender
- H101: Höhe von 101
- 102: Bodenplatte
- D102: Durchmesser von 102
- 102b: Oberseite von 102
- 102d: Schraubmutter von 102
- 103: Mantelhülle
- 103a: Trichtereinlass von 103
- 103b: Trichterauslass von 103
- 103c: Hohlraum von 103
- 104: rohrartiger Hals
- 104a: Rohreinlass von 104
- D104a: Durchmessers von 104
- 104b: Rohrauslass von
- 104c: Innenraum von 104
- 105: Kopf
- 105a: Kopfeinlass von 105
- 105c: Innenraum von 105
- 105d: Schraubmutter von 105
- 106: erste Ladesteckdose
- 107: zweite Ladesteckdose
- 108: Kabelbaum
- 109: Energiespeicher 1
- 110a, 110b: ersten Ende von 108
- 111a: zweites Ende von 108
- 112: ringartiger Körper
- 113: Durchgangsöffnung in 112
- 114: Verbindungsmittel
- 115: Gewindestange
- 116: Griffelement
- 117: Empfangseinrichtung
- 118: Ladegerät
- 119: Leistungselektronik
- 120: Spannungswandler
- 121: Wechselrichter

- 180: Versorgungseinrichtung
- 181: Kontaktplatte
- 182: Sendeeinrichtung

- 190: System

- S106, S107: Stecker
- U: Untergrund
- x, x': horizontaler Richtung

- 201: Energiespender
- 203: Mantelhülle
- 204: Hals
- 209: Energiespeicher
- 240: Plattform
- 241: Tischplatte
- 242: Sendeeinrichtung

- G: mobiles Gerät
- E: Empfangseinrichtung von G

- 301: Energiespenders 301
- H301: Höhe H301
- 304: Hals 304

- 401: Energiespender
- 403: Mantelhülle
- 404: Hals
- 405: Kopf

- 501: Energiespender
- 502: Bodenplatte
- 502a: Unterseite von 502
- 503: Mantelhülle
- 505: Kopf
- 506, 507: Ladesteckdose
- 509: Energiespeicher
- 518: Ladegerät
- 540: Plattform
- 542: Sendeeinrichtung
- 551: Gegenstecker
- 580: Versorgungseinrichtung
- 581: Kontaktplatte
- 581b: Oberseite von 581
- 586: Stecker

- 590: System

- 801a-801e: Energiespender
- 802a, 802b: Bodenplatte
- 802c: Bodenplatte
- 804e: Hals
- 805e: Kopf
- 805d: Kopf
- 809a-809e: Energiespeicher
- 840a-840c: Plattform
- 851a-851e: Lichtquelle
- 852a, 852b: flächiges Leuchtmittel
- 852c: flächiges Leuchtmittel
- 853a, 853b: Unterseite von 840a, 840b
- 854c: Oberseite von 840c
- 861d: Verlängerung von 805d
- 861e: Verlängerung von 804e

## Patentansprüche

1. Bodenstehender Energiespender (101; 201; 301; 401; 501) umfassend
- eine Bodenplatte (102),
- eine trichterartige Mantelhülle (103) mit einem Trichtereinlass (103a) und einem Trichterauslass (103b),
- einen rohrartigen Hals (104) mit einem Rohreinlass (104a) und einem Rohrauslass (104b),
- einen Kopf (105),
- wenigstens eine Ladesteckdose (106; 107),
- einen Kabelbaum (108) und
- einen Energiespeicher (109) für elektrische Energie,
- wobei die Mantelhülle (103) mit ihrem Trichtereinlass (103a) mit der Bodenplatte (102) verbunden ist,
- wobei die Mantelhülle (103) mit ihrem Trichterauslass (103b) in den Einlass (104a) des Halses (104) übergeht und
- wobei der Hals (104) mit seinem Auslass (104b) in den Kopf (105) übergeht,
- wobei die wenigstens eine Ladesteckdose (106; 107) in dem Kopf (105) angeordnet ist,
- wobei die wenigstens eine Ladesteckdose (106; 107) mit einem ersten Ende (110a, 110b) des Kabelbaums (108) verbunden ist,
- wobei der Kabelbaum (108) aus dem Kopf (105) heraus durch einen Innenraum (104c) des Halses (104) in einen Hohlraum (103c) der Mantelhülle (103) geführt ist,
- wobei der Energiespeicher (109) in dem Hohlraum (103c) der Mantelhülle (103) angeordnet ist und
wobei ein zweites Ende (111a) des Kabelbaums (108) mit dem Energiespeicher (109) verbunden ist.

2. Bodenstehender Energiespender (101; 201; 301; 401; 501) nach Anspruch 1, **dadurch gekennzeichnet, dass** der Energiespeicher (109) als ringartiger Körper (112) mit einer Durchgangsöffnung (113) ausgebildet ist.

3. Bodenstehender Energiespender (101; 201; 301; 401; 501) nach Anspruch 1 oder 2, **dadurch gekennzeichnet, dass** der Energiespender (101; 201; 301; 401; 501) weiterhin ein Verbindungsmittel (114) umfasst, wobei der Kopf (105) durch den Hals (104) und die Mantelhülle (103) hindurch durch das Verbindungsmittel (114) mit der Bodenplatte (102) verbunden ist, wobei das Verbindungsmittel (114) als starres Verbindungsmittel, insbesondere als Stange und vorzugsweise als Gewindestange (115) oder als flexibles Verbindungsmittel, insbesondere als Schnur oder als Band derart mit dem Kopf (105) und der Bodenplatte (102) verbunden ist, dass weder der Hals (104) noch die Mantelhülle (103) beim Tragen des Energiespenders (101; 201; 301; 401; 501) an dem ein Griffelement (116) bildenden Kopf (105) eine aus der Gewichtskraft des Energiespeichers (109) resultierende Zugkraft übertragen müssen.

4. Bodenstehender Energiespender (101; 201; 301; 401; 501) nach Anspruch 2 oder 3, **dadurch gekennzeichnet, dass** die Durchgangsöffnung (113) des Energiespeichers (109) zentrisch zu der Bodenplatte (102) ausgerichtet ist und dass der Energiespeicher (109) insbesondere flächig auf einer Oberseite (102b) der Bodenplatte (102) aufliegt und dass die Durchgangsöffnung (113) von dem Verbindungsmittel (114) durchlaufen ist.

5. Bodenstehender Energiespender (101; 201; 301; 401; 501) nach Anspruch 1, **dadurch gekennzeichnet, dass** die Bodenplatte (102) einen Durchmesser (D102) aufweist, welcher wenigstens einem 3-fachen und vorzugsweise wenigstens einem 4-fachen eines Durchmessers (D104a) des Halses entspricht.

6. Bodenstehender Energiespender (101; 201; 301; 401; 501) nach Anspruch 1, **dadurch gekennzeichnet, dass** der Energiespender (101; 201; 301; 401; 501) wenigstens eine Plattform (240; 540) umfasst, wobei die Plattform (240; 540) zwischen der Mantelhülle (203) und dem Kopf (205; 505) angeordnet ist und insbesondere zwischen der Mantelhülle (203) und dem Hals (204) angeordnet ist.

7. Bodenstehender Energiespender (101; 201; 301; 401; 501) nach Anspruch 6, **dadurch gekennzeichnet, dass** die Plattform (240; 540) wenigstens eine Sendeeinrichtung (242; 542) zur drahtlosen Energieübertragung umfasst, wobei die Sendeeinrichtung (242; 542) derart ausgebildet ist, dass ein auf der Plattform (240; 540) liegendes mobiles Gerät (G), welches eine geeignete Empfangseinrichtung (E) umfasst, ladbar ist, wobei die wenigstens eine Sendeeinrichtung (242; 542) über den Kabelbaum mit dem Energiespeicher (209; 509) verbunden ist.

8. Bodenstehender Energiespender (101; 201; 301; 401; 501) nach wenigstens einem der vorhergehenden Ansprüche, **dadurch gekennzeichnet, dass** die wenigstens eine Ladesteckdose (106; 107) in dem Kopf (105) derart angeordnet ist, dass ein Stecker (S106; S107) eines anzuschließendes Geräts bei stehendem Energiespender (101; 201; 301; 401; 501) in horizontaler Richtung (x, x') mit der Ladesteckdose (106; 107) verbindbar und in horizontaler Richtung von der Ladesteckdose (106; 107) trennbar ist.

9. Bodenstehender Energiespender (101; 201; 301; 401; 501) nach wenigstens einem der vorhergehenden Ansprüche, **dadurch gekennzeichnet, dass** der Energiespender (101; 201; 301; 401; 501) ein Ladegerät (118; 518) umfasst, über welches der Energiespeicher (109; 509) mit Strom versorgbar und ladbar ist, wobei das Ladegerät (118; 518) derart ausgebildet ist, dass diese mittels einer drahtlos versorgbaren Empfangseinrichtung (117) und/oder drahtgebunden mittels eines Gegensteckers (551) mit Strom versorgbar ist.

10. Bodenstehender Energiespender (101; 201; 301; 401; 501) nach wenigstens einem der vorhergehenden Ansprüche, **dadurch gekennzeichnet,**
- **dass** der Energiespender (101; 201; 301; 401; 501) eine Leistungselektronik (119) umfasst,
- wobei die Leistungselektronik (119) insbesondere einen Spannungswandler (120) oder insbesondere einen Spannungswandler (120) und einen Wechselrichter (121) umfasst,
- wobei die Leistungselektronik (119) insbesondere an dem Kabelbaum (108) angeschlossen ist und insbesondere zwischen dem Energiespeicher (109; 209) und der wenigstens einen Ladesteckdose (106; 107) angeordnet ist oder insbesondere zwischen dem Energiespeicher (109; 209) und der wenigstens einen Ladesteckdose (106; 107) und der Plattform (240) angeordnet ist.

11. Bodenstehender Energiespender nach wenigstens einem der vorhergehenden Ansprüche, **dadurch gekennzeichnet, dass** der Energiespender (801a-801e) wenigstens eine von dem Energiespeicher (809a-809e) gespeiste Lichtquelle (851a-851e) umfasst, wobei die Lichtquelle (851a-851e) insbesondere als flächiges Leuchtmittel (852a, 852b) an einer der Bodenplatte (802a, 802b) gegenüber liegenden Fläche des Energiespenders (801a, 801b) insbesondere einer Unterseite (853a, 853b) einer Plattform (840a, 840b) angeordnet ist oder an einer von der Bodenplatte (802c) abgewandten Fläche des Energiespenders (801c), insbesondere einer Oberseite (854c) einer Plattform (840c) angeordnet ist oder wobei die Lichtquelle (851d, 851e) insbesondere an einer Verlängerung (861d) des Kopfes (805d) oder einer Verlängerung (861e) des Halses (804e) angeordnet ist.

12. System umfassend einen Energiespender (101; 201; 301; 401; 501) und eine Versorgungseinrichtung (180; 580), **dadurch gekennzeichnet, dass** der Energiespeicher (109; 509) als bodenstehender Energiespender (101; 201; 301; 401; 501) entsprechend wenigstens einem der Ansprüche 1 bis 10 ausgebildet ist und dass durch die Versorgungseinrichtung (180; 580) eine drahtgebundene und/oder drahtlose Energieversorgung für den Energiespender (101; 201; 301; 401; 501) bereitstellbar ist, wenn der Energiespender (101; 201; 301; 401; 501) mit seiner Bodenplatte (102; 502) auf eine Kontaktplatte (181; 581) der Versorgungseinrichtung (180; 580) abgestellt ist.

13. System nach Anspruch 12, **dadurch gekennzeichnet, dass** die Versorgungseinrichtung (180; 580) die Bodenplatte (102; 502) des Energiespender (101; 201; 301; 401; 501)s oder die Bodenplatte (102; 502) und die Mantelhülle (103; 503) des Energiespenders (101; 201; 301; 401; 501) formschlüssig aufnimmt.

14. System nach Anspruch 12 oder 13, **dadurch gekennzeichnet, dass** zur drahtlosen Energieübertragung die Versorgungseinrichtung (180) eine Sendeeinrichtung (182) umfasst und der Energiespender (101; 201; 301; 401; 501) eine Empfangseinrichtung (117) umfasst, wobei die Sendeeinrichtung (182) insbesondere im Bereich der Kontaktplatte (181) der Versorgungseinrichtung (180) angeordnet ist und wobei die Empfangseinrichtung (117) insbesondere im Bereich der Bodenplatte (102) des Energiespenders (101; 201; 301; 401; 501) angeordnet ist.

15. System nach Anspruch 12 oder 13, **dadurch gekennzeichnet, dass** zur drahtgebundenen Energieübertragung die Versorgungseinrichtung (580) einen Stecker (586) umfasst und der Energiespender (101; 201; 301; 401; 501) einen Gegenstecker (551) umfasst, wobei der Stecker (586) insbesondere im Bereich der Kontaktplatte (581) der Versorgungseinrichtung (580) und insbesondere zentrische auf einer Oberseite (581b) der Kontaktplatte (581) angeordnet ist, wobei der Gegenstecker (551) insbesondere im Bereich der Bodenplatte (502) des Energiespenders (101; 201; 301; 401; 501) und insbesondere zentrisch an einer Unterseite (502a) der Kontaktplatte (502) angeordnet ist, wobei der Stecker (586) und der Gegenstecker (551) insbesondere als Koaxialstecker ausgebildet sind und vorzugsweise als für die Übertragung von Wechselstrom ausgebildete Koaxialstecker ausgebildet sind.

## Claims

1. Floor-standing energy dispenser (101; 201; 301; 401; 501) comprising
- a base plate (102),
- a funnel-like casing (103) with a funnel inlet (103a) and a funnel outlet (103b),
- a tube-like neck (104) with a tube inlet (104a) and a tube outlet (104b),
- a head (105),
- at least one charging socket (106; 107),
- a cable harness (108) and
- an energy storage device (109) for electrical energy,
- wherein the casing (103) is connected by its funnel inlet (103a) to the base plate (102),
- wherein the casing (103) merges by its funnel outlet (103b) with the inlet (104a) of the neck (104) and
- wherein the neck (104) merges by its outlet (104b) with the head (105),
- wherein the at least one charging socket (106; 107) is arranged in the head (105),
- wherein the at least one charging socket (106; 107) is connected to a first end (110a, 110b) of the cable harness (108),
- wherein the cable harness (108) is led out of the head (105) through an interior space (104c) of the neck (104) into a hollow space (103c) of the casing (103),
- wherein the energy storage device (109) is arranged in the hollow space (103c) of the casing (103) and
- wherein a second end (111a) of the cable harness (108) is connected to the energy storage device (109).

2. Floor-standing energy dispenser (101; 201; 301; 401; 501) according to Claim 1, **characterized in that** the energy storage device (109) is formed as a ring-like body (112) with a through-opening (113).

3. Floor-standing energy dispenser (101; 201; 301; 401; 501) according to Claim 1 or 2, **characterized in that** the energy dispenser (101; 201; 301; 401; 501) additionally comprises a connecting means (114), wherein the head (105) is connected through the neck (104) and the casing (103) to the base plate (102) by the connecting means (114), wherein the connecting means (114) is connected as a rigid connecting means, in particular as a rod and preferably as a threaded rod (115), or as a flexible connecting means, in particular as a cord or a band, to the head (105) and the base plate (102) in such a way that, when the energy dispenser (101; 201; 301; 401; 501) is being carried at the head (105) that forms a handle element (116), neither the neck (104) nor the casing (103) has to transmit a tensile force resulting from the weight of the energy storage device (109).

4. Floor-standing energy dispenser (101; 201; 301; 401; 501) according to Claim 2 or 3, **characterized in that** the through-opening (113) of the energy storage device (109) is aligned centrally in relation to the base plate (102) and **in that** the energy storage device (109) rests, in particular flat, on an upper side (102b) of the base plate (102) and **in that** the through-opening (113) has the connecting means (114) extending through it.

5. Floor-standing energy dispenser (101; 201; 301; 401; 501) according to Claim 1, **characterized in that** the base plate (102) has a diameter (D102) that corresponds to at least 3 times and preferably at least 4 times a diameter (D104a) of the neck.

6. Floor-standing energy dispenser (101; 201; 301; 401; 501) according to Claim 1, **characterized in that** the energy dispenser (101; 201; 301; 401; 501) comprises at least one platform (240; 540), wherein the platform (240; 540) is arranged between the casing (203) and the head (205; 505) and in particular is arranged between the casing (203) and the neck (204).

7. Floor-standing energy dispenser (101; 201; 301; 401; 501) according to Claim 6, **characterized in that** the platform (240; 540) comprises at least one transmission device (242; 542) for wireless energy transmission, wherein the transmission device (242; 542) is formed in such a way that a mobile unit (G) lying on the platform (240; 540) and comprising a suitable receiving device (E) can be charged, wherein the at least one transmission device (242; 542) is connected to the energy storage device (209; 509) via the cable harness.

8. Floor-standing energy dispenser (101; 201; 301; 401; 501) according to at least one of the preceding claims, **characterized in that** the at least one charging socket (106; 107) is arranged in the head (105) in such a way that, when the energy dispenser (101; 201; 301; 401; 501) is upright, a connector (S106; S107) of a unit to be connected can be connected to the charging socket (106; 107) in the horizontal direction (x, x') and can be disconnected from the charging socket (106; 107) in the horizontal direction.

9. Floor-standing energy dispenser (101; 201; 301; 401; 501) according to at least one of the preceding claims, **characterized in that** the energy dispenser (101; 201; 301; 401; 501) comprises a charger (118; 518), via which the energy storage device (109; 509) can be supplied and charged with electric current, wherein the charger (118; 518) is formed in such a way that it can be supplied with electric current by means of a receiving device (117) that can be supplied wirelessly and/or can be supplied with electric current in a wired manner by means of a mating connector (551).

10. Floor-standing energy dispenser (101; 201; 301; 401; 501) according to at least one of the preceding claims, **characterized**
- **in that** the energy dispenser (101; 201; 301; 401; 501) comprises a set of power electronics (119),
- wherein the set of power electronics (119) comprises in particular a voltage transformer (120) or in particular a voltage transformer (120) and an inverter (121),
- wherein the set of power electronics (119) is connected in particular to the cable harness (108) and is arranged in particular between the energy storage device (109; 209) and the at least one charging socket (106; 107) or is arranged in particular between the energy storage device (109; 209) and the at least one charging socket (106; 107) and the platform (240).

11. Floor-standing energy dispenser according to at least one of the preceding claims, **characterized in that** the energy dispenser (801a-801e) comprises at least one light source (851a-851e) fed from the energy storage device (809a-809e), wherein the light source (851a-851e) is arranged in particular as a flat lamp (852a, 852b) on a surface of the energy dispenser (801a, 801b) that is opposite the base plate (802a, 802b), in particular an underside (853a, 853b) of a platform (840a, 840b) or is arranged on a surface of the energy dispenser (801c) that faces away from the base plate (802c), in particular an upper side (854c) of a platform (840c), or wherein the light source (851d, 851e) is arranged in particular on an extension (861d) of the head (805d) or on an extension (861e) of the neck (804e).

12. System comprising an energy dispenser (101; 201; 301; 401; 501) and a supply device (180; 580), **characterized in that** the energy storage device (109; 509) is formed as a floor-standing energy dispenser (101; 201; 301; 401; 501) according to at least one of Claims 1 to 10 and **in that** a wire-bound and/or wireless supply of energy for the energy dispenser (101; 201; 301; 401; 501) can be provided by the supply device (180; 580) when the energy dispenser (101; 201; 301; 401; 501) is placed with its base plate (102; 502) onto a contact plate (181; 581) of the supply device (180; 580).

13. System according to Claim 12, **characterized in that** the supply device (180; 580) receives the base plate (102; 502) of the energy dispenser (101; 201; 301; 401; 501) or the base plate (102; 502) and the casing (103; 503) of the energy dispenser (101; 201; 301; 401; 501) by positive engagement.

14. System according to Claim 12 or 13, **characterized in that**, for wireless energy transmission, the supply device (180) comprises a transmission device (182) and the energy dispenser (101; 201; 301; 401; 501) comprises a receiving device (117), wherein the transmission device (182) is arranged in particular in the region of the contact plate (181) of the supply device (180) and wherein the receiving device (117) is arranged in particular in the region of the base plate (102) of the energy dispenser (101; 201; 301; 401; 501).

15. System according to Claim 12 or 13, **characterized in that**, for wireless energy transmission, the supply device (580) comprises a connector (586) and the energy dispenser (101; 201; 301; 401; 501) comprises a mating connector (551), wherein the connector (586) is arranged in particular in the region of the contact plate (581) of the supply device (580) and in particular centrally on an upper side (581b) of the contact plate (581), wherein the mating connector (551) is arranged in particular in the region of the base plate (502) of the energy dispenser (101; 201; 301; 401; 501) and in particular centrally on an underside (502a) of the contact plate (502), wherein the connector (586) and the mating connector (551) are formed, in particular, as coaxial connectors and preferably are formed as coaxial connectors designed for the transmission of alternating current.

## Revendications

1. Distributeur d'énergie (101 ; 201 ; 301 ; 401 ; 501) posé au sol, comprenant
- une plaque de fond (102),
- une gaine d'enveloppe (103) de type entonnoir pourvue d'une entrée d'entonnoir (103a) et d'une sortie d'entonnoir (103b),
- un col (104) de type tube pourvu d'une entrée de tube (104a) et d'une sortie de tube (104b),
- une tête (105),
- au moins une prise de charge (106 ; 107),
- un faisceau de câbles (108) et
- un accumulateur d'énergie (109) pour l'énergie électrique,
- la gaine d'enveloppe (103) étant reliée à la plaque de fond (102) par son entrée d'entonnoir (103a),
- la gaine d'enveloppe (103), avec sa sortie d'entonnoir (103b), se transformant en l'entrée (104a) du col (104) et
- le col (104), avec sa sortie (104b), se transformant en la tête (105),
- l'au moins une prise de charge (106 ; 107) étant disposée dans la tête (105),
- l'au moins une prise de charge (106 ; 107) étant reliée à une première extrémité (110a, 110b) du faisceau de câbles (108),
- le faisceau de câbles (108) étant amenée hors de la tête (105) à travers un espace intérieur (104c) du col (104) dans un espace creux (103c) de la gaine d'enveloppe (103),
- l'accumulateur d'énergie (109) étant disposé dans l'espace creux (103c) de la gaine d'enveloppe (103) et une deuxième extrémité (111a) du faisceau de câbles (108) étant reliée à l'accumulateur d'énergie (109).

2. Distributeur d'énergie (101 ; 201 ; 301 ; 401 ; 501) posé au sol selon la revendication 1, **caractérisé en ce que** l'accumulateur d'énergie (109) est réalisé sous la forme d'un corps (112) de type anneau pourvu d'une ouverture de passage (113).

3. Distributeur d'énergie (101 ; 201 ; 301 ; 401 ; 501) posé au sol selon la revendication 1 ou 2, **caractérisé en ce que** le distributeur d'énergie (101 ; 201 ; 301 ; 401 ; 501) comporte en outre un moyen d'assemblage (114), la tête (105) étant reliée à la plaque de fond (102) par le moyen d'assemblage (114) à travers le col (104) et la gaine d'enveloppe (103), le moyen d'assemblage (114), en tant que moyen d'assemblage rigide, notamment sous la forme d'une tige et de préférence sous la forme d'une fige filetée (115), ou en tant que moyen d'assemblage flexible, notamment sous la forme d'une ficelle ou d'une bande, étant relié à la tête (105) et à la plaque de fond (102) de telle sorte que ni le col (104), ni la gaine d'enveloppe (103), lors du port du distributeur d'énergie (101 ; 201 ; 301 ; 401 ; 501) au niveau de la tête (105) formant un élément de préhension (116), doivent transmettre une force de traction résultant du poids de l'accumulateur d'énergie (109).

4. Distributeur d'énergie (101 ; 201 ; 301 ; 401 ; 501) posé au sol selon la revendication 2 ou 3, **caractérisé en ce que** l'ouverture de passage (113) de l'accumulateur d'énergie (109) est orientée centrée par rapport à la plaque de fond (102) et **en ce que** l'accumulateur d'énergie (109) repose notamment à plat sur un côté supérieur (102b) de la plaque de fond (102) et **en ce que** l'ouverture de passage (113) est traversée par le moyen d'assemblage (114).

5. Distributeur d'énergie (101 ; 201 ; 301 ; 401 ; 501) posé au sol selon la revendication 1, **caractérisé en ce que** la plaque de fond (102) présente un diamètre (D102) qui correspond au moins à un triple et de préférence au moins à un quadruple d'un diamètre (D104a) du col.

6. Distributeur d'énergie (101 ; 201 ; 301 ; 401 ; 501) posé au sol selon la revendication 1, **caractérisé en ce que** le distributeur d'énergie (101 ; 201 ; 301 ; 401 ; 501) comporte au moins une plateforme (240 ; 540), la plateforme (240 ; 540) étant disposée entre la gaine d'enveloppe (203) et la tête (205 ; 505) et étant notamment disposée entre la gaine d'enveloppe (203) et le col (204).

7. Distributeur d'énergie (101 ; 201 ; 301 ; 401 ; 501) posé au sol selon la revendication 6, **caractérisé en ce que** la plateforme (240 ; 540) comporte au moins un dispositif d'émission (242 ; 542) destiné à la transmission d'énergie sans fil, le dispositif d'émission (242 ; 542) étant configuré de telle sorte qu'un appareil mobile (G) qui repose sur la plateforme (240 ; 540), lequel comporte un dispositif de réception (E) approprié, peut être chargé, l'au moins un dispositif d'émission (242 ; 542) étant relié à l'accumulateur d'énergie (209 ; 509) par le biais du faisceau de câbles.

8. Distributeur d'énergie (101 ; 201 ; 301 ; 401 ; 501) posé au sol selon au moins l'une des revendications précédentes, **caractérisé en ce que** l'au moins une prise de charge (106 ; 107) est disposée dans la tête (105) de telle sorte qu'une fiche (S106 ; S107) d'un appareil à raccorder peut être reliée à la prise de charge (106 ; 107) dans la direction horizontale (x, x') lorsque le distributeur d'énergie (101 ; 201 ; 301 ; 401 ; 501) est vertical et peut être séparée de la prise de charge (106 ; 107) dans la direction horizontale.

9. Distributeur d'énergie (101 ; 201 ; 301 ; 401 ; 501) posé au sol selon au moins l'une des revendications précédentes, **caractérisé en ce que** le distributeur d'énergie (101 ; 201 ; 301 ; 401 ; 501) comporte un chargeur (118 ; 518) par le biais duquel l'accumulateur d'énergie (109 ; 509) peut être alimenté en courant et chargé, le chargeur (118 ; 518) étant configuré de telle sorte que celui-ci peut être alimenté en courant au moyen d'un dispositif de réception (117) qui peut être alimenté sans fil et/ou de manière filaire au moyen d'une fiche homologue (551).

10. Distributeur d'énergie (101 ; 201 ; 301 ; 401 ; 501) posé au sol selon au moins l'une des revendications précédentes, **caractérisé en ce que**
- le distributeur d'énergie (101 ; 201 ; 301 ; 401 ; 501) comporte une électronique de puissance (119),
- l'électronique de puissance (119) comportant notamment un convertisseur de tension (120) ou notamment un convertisseur de tension (120) et un onduleur (121),
- l'électronique de puissance (119) étant notamment raccordée au faisceau de câbles (108) et notamment disposée entre l'accumulateur d'énergie (109 ; 209) et l'au moins une prise de charge (106 ; 107) ou notamment entre l'accumulateur d'énergie (109 ; 209) et l'au moins une prise de charge (106 ; 107) et la plateforme (240).

11. Distributeur d'énergie posé au sol selon au moins l'une des revendications précédentes, **caractérisé en ce que** le distributeur d'énergie (801a-801e) comporte une source de lumière (851a-851e) alimentée par l'accumulateur d'énergie (809a-809e), la source de lumière (851a-851e), notamment sous la forme d'un moyen lumineux plat (852a, 852b), étant disposée sur une surface du distributeur d'énergie (801a, 801b) qui se trouve en vis-à-vis de la plaque de fond (802a, 802b), notamment un côté inférieur (853a, 853b) d'une plateforme (840a, 840b), ou étant disposée sur une surface du distributeur d'énergie (801c) à l'opposé de la plaque de fond (802c), notamment un côté supérieur (854c) d'une plateforme (840c), ou la source de lumière (851d, 851e) étant notamment disposée sur une prolongation (861d) de la tête (805d) ou une prolongation (861e) du col (804e).

12. Système comprenant un distributeur d'énergie (101 ; 201 ; 301 ; 401 ; 501) et un dispositif d'alimentation (180 ; 580), **caractérisé en ce que** l'accumulateur d'énergie (109 ; 509) est réalisé sous la forme d'un distributeur d'énergie (101 ; 201 ; 301 ; 401 ; 501) posé au sol selon au moins l'une des revendications 1 à 10 et **en ce qu'**une alimentation en énergie filaire et/ou sans fil peut être fournie par le dispositif d'alimentation (180 ; 580) pour le distributeur d'énergie (101 ; 201 ; 301 ; 401 ; 501) lorsque le distributeur d'énergie (101 ; 201 ; 301 ; 401 ; 501) est déposé avec sa plaque de fond (102 ; 502) sur une plaque de contact (181 ; 581) du dispositif d'alimentation (180 ; 580).

13. Système selon la revendication 12, **caractérisé en ce que** le dispositif d'alimentation (180 ; 580) accueille par complémentarité de formes la plaque de fond (102 ; 502) du distributeur d'énergie (101 ; 201 ; 301 ; 401 ; 501) ou la plaque de fond (102 ; 502) et la gaine d'enveloppe (103 ; 503) du distributeur d'énergie (101 ; 201 ; 301 ; 401 ; 501).

14. Système selon la revendication 12 ou 13, **caractérisé en ce que** pour la transmission d'énergie sans fil, le dispositif d'alimentation (180) comporte un dispositif d'émission (182) et le distributeur d'énergie (101 ; 201 ; 301 ; 401 ; 501) comporte un dispositif de réception (117), le dispositif d'émission (182) étant notamment disposé dans la zone de la plaque de contact (181) du dispositif d'alimentation (180) et le dispositif de réception (117) étant notamment disposé dans la zone de la plaque de fond (102) du distributeur d'énergie (101 ; 201 ; 301 ; 401 ; 501).

15. Système selon la revendication 12 ou 13, **caractérisé en ce que** pour la transmission d'énergie filaire, le dispositif d'alimentation (580) comporte une fiche (586) et le distributeur d'énergie (101 ; 201 ; 301 ; 401 ; 501) comporte une fiche homologue (551), la fiche (586) étant notamment disposée dans la zone de la plaque de contact (581) du dispositif d'alimentation (580) et notamment centrée sur un côté supérieur (581b) de la plaque de contact (581), la fiche homologue (551) étant notamment disposée dans la zone de la plaque de fond (502) du distributeur d'énergie (101 ; 201 ; 301 ; 401 ; 501) et notamment centrée sur un côté inférieur (502a) de la plaque de fond (502), la fiche (586) et la fiche homologue (551) étant notamment réalisées sous la forme de fiches coaxiales et étant de préférence réalisées sous la forme de fiches coaxiales configurées pour la transmission de courant alternatif.
